(19) **Europäisches Patentamt**
**European Patent Office**
**Office européen des brevets**

(11) Veröffentlichungsnummer : **0 303 226 B1**

(12) # EUROPÄISCHE PATENTSCHRIFT

(45) Veröffentlichungstag der Patentschrift :
**15.05.91 Patentblatt 91/20**

(51) Int. Cl.$^5$ : **A01D 33/06, A01D 33/02**

(21) Anmeldenummer : **88112914.2**

(22) Anmeldetag : **09.08.88**

(54) **Mehrreihige Kartoffelerntemaschine.**

(30) Priorität : **10.08.87 DE 3726559**

(43) Veröffentlichungstag der Anmeldung :
**15.02.89 Patentblatt 89/07**

(45) Bekanntmachung des Hinweises auf die
Patenterteilung :
**15.05.91 Patentblatt 91/20**

(84) Benannte Vertragsstaaten :
**BE DE FR GB NL**

(56) Entgegenhaltungen :
**DD-A- 131 447**
**DD-A- 132 918**
**DE-B- 1 051 553**
**US-A- 3 826 436**

(73) Patentinhaber : **Albersmeier, Heinz**
**Amtmannshof 7**
**W-5170 Jülich (DE)**

(72) Erfinder : **Albersmeier, Heinz**
**Amtmannshof 7**
**W-5170 Jülich (DE)**

(74) Vertreter : **Patentanwälte Dipl.-Ing. Bodo**
**Thielking Dipl.-Ing. Otto Elbertzhagen**
**Gadderbaumer Strasse 20**
**W-4800 Bielefeld 1 (DE)**

Jouve, 18, rue Saint-Denis, 75001 PARIS

**Beschreibung**

Die Erfindung betrifft eine mehrreihige Kartoffelerntemaschine mit einer Rodeeinrichtung, einem umlaufenden Krautförderband und einem Kartoffelförderband sowie mit einer am hinteren Ende des Krautförderbandes angeordneten Häckseleinrichtung, die eine rotierende Welle mit Häckselwerkzeugen aufweist, die auf einem zum Krautförderband benachbarten Schlagkreis umlaufen, wobei am hinteren Ende des Krautförderbandes eine um eine Drehachse umlaufende Umlenkeinrichtung vorgesehen ist, die das in Richtung auf die Häckseleinrichtung zulaufende Krautförderband nach unten umlenkt.

Bei einer bekannten Kartoffelerntemaschine dieser Art (US-A 3.826.436) wird das Krautförderband hinter der oberen Umlenkeinrichtung schräg nach hinten und unten geführt und über eine untere Umlenkeinrichtung wieder nach vorn. Die Krautkette verläuft zwischen diesen beiden Umlenkeinrichtungen schräg nach unten und hinten. Hinter dem Bereich der Krautkette zwischen den beiden Umlenkeinrichtungen ist die Häckseleinrichtung angeordnet, deren Schlagkreis etwa in der Mitte der beiden Umlenkeinrichtungen den kleinsten Abstand zum Krautförderband aufweist. Eine derartige Anordnung von Krautförderband und Häcksler erweist sich in der Praxis als unbefriedigend. Diese Anordnung hat zur Folge, daß das vom Krautförderband kommende Kartoffelkraut an der oberen Umlenkeinrichtung nicht vollständig abgeworfen sondern teilweise nach unten mitgenommen und auf den Acker abgeworfen wird, ohne daß es zerkleinert worden ist. Außerdem neigt die bekannte Kartoffelerntemaschine zu einem Verstopfen der Häckseleinrichtung. Diese Nachteile haben ihre Ursache in der Anordnung der Häckseleinrichtung bzw. in der Zuordnung von Häckseleinrichtung und Krautförderband.

Der Erfindung liegt die Aufgabe zugrunde, eine Kartoffelerntemaschine der als bekannt vorausgesetzten Art so auszubilden, daß das zugeförderte Kartoffelkraut zuverlässig und sicher in die Häckseleinrichtung eingeführt und zerkleinert wird, wobei Verstopfungen vermieden werden sollen.

Die Lösung dieser Aufgabe erfolgt erfindungsgemäß dadurch, daß das Krautförderband um die Umlenkeinrichtung herum auch nach vorn geführt ist und der Abstand zweier durch die Drehachse der rotierenden Welle des Häckslers und die Drehachse der Umlenkeinrichtung verlaufender Ebenen kleiner ist als der Radius des Schlagkreises.

Bei einer bevorzugten Ausführungsform umschlingt das Krautförderband die Umlenkeinrichtung über einen Winkel von über 90°.

Die erfindungsgemäße Ausbildung stellt sicher, daß das mit dem Krautförderband nach hinten geförderte Kartoffelkraut im Bereich der oberen Umlenkeinrichtung sicher vom Krautförderband in die Häckseleinrichtung abgeworfen wird. Durch die Tatsache, daß das Krautförderband die Umlenkeinrichtung über einen Winkel von über 90° umschlingt, vorzugsweise um bis zu 180°, wird das Ablösen des Kartoffelkrauts vom Krautförderband sichergestellt. Die Ablöswirkung wird dabei noch unterstützt durch eine gewisse Saugwirkung der Häckselvorrichtung.

Bevorzugte Ausgestaltungen der Erfindung sind in den weiteren Unteransprüchen beschrieben. Die erfindungsgemäße Kartoffelerntemaschine soll in erster Linie als Kartoffelschubroder eingesetzt, also an der Frontseite eines Fahrzeugs angeordnet werden.

Nachstehend wird eine bevorzugte Ausführungsform der Erfindung anhand der Zeichnung im einzelnen beschrieben. Es zeigen :

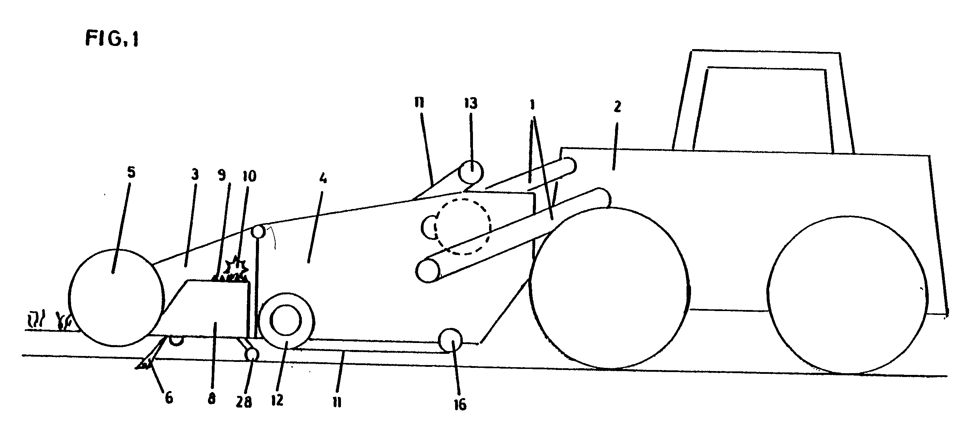

Figur 1 - eine schematische Seitenansicht der Kartoffelerntemaschine im Anbauzustand an einem Schlepper mit Geräteträger

Figur 2 - einen schematischen Längsschnitt durch die Kartoffelerntemaschine

Figur 3 - eine Darstellung von im vorderen Bereich der Kartoffelerntemaschine angeordneten Siebwalzen

Figur 4 - eine vergrößerte Darstellung der Anordnung des hinteren Bereichs des Krautförderbandes und der Häckselvorrichtung

Figur 5 - eine Darstellung analog Figur 1 mit Kartoffelerntemaschine im Transportzustand für die Straße.

Ein Schlepper 2 ist als Geräteträger ausgebildet. An einer Dreipunkt-Anhängevorrichtung 1 des Schleppers 2 ist das Gestell der Kartoffelerntemaschine angehängt, welches zweiteilig ausgebildet ist. Der vordere Teil des Gestells ist mit 3 und der hintere Teil mit 4 bezeichnet.

Im vorderen Teil 3 des Gestells ist eine Dammrolle 5 angeordnet, die gemeinsam mit dem sich anschließenden Rodeschar 6 die Rodeeinrichtung bildet. Die vom Rodeschar ausgegrabenen Kartoffeln gelangen mit dem Kartoffelkraut auf eine aus Walzen 7 gebildete erste Förder- und Siebvorrichtung. Diese Förder- und Siebvorrichtung dient in erster Linie dazu, den an den Kartoffeln verbliebenen Erdboden abzusieben. Die aus den Walzen 7 bestehende Förder- und Siebvorrichtung ist in einem gesonderten Rahmen 8 verschiebbar angeordnet. Hierzu besitzt der Rahmen 8 eine Zahnstange 9, die mit Hilfe eines darin eingreifenden Ritzels 10 bewegt werden kann.

Von der aus den Walzen 7 bestehenden Förder- und Siebvorrichtung gelangen Kartoffeln und Kartoffelkraut auf das Krautförderband 11, welches im hinteren Teil 4 des Gestells angeordnet ist und welches über die Umlenkeinrichtungen 12, 13, 14, 15 und 16 geführt ist. Auf dem nach oben und hinten führenden Trum dieses Krautförderbands gelangen Kartoffeln und Kartoffelkraut nach hinten. Die Kartoffeln sollen durch die Lücken oder Maschen des Krautförderbands 11 in bekannter Weise nach unten hindurchfallen. Die Kartoffeln gelangen dann auf ein Kartoffelförderband 17, welches innerhalb des Krautförderbandes 11 achsparallel umläuft. Am hinteren oberen Ende des Krautförderbands 11 soll nach Möglichkeit nur noch Kartoffelkraut liegen. Dem Kartoffelförderband 17 sind zwei gegenläufige, quer verlaufende Kartoffelförderbänder 18 nachgeordnet, welche die vom Kartoffelförderband 17 kommenden Kartoffeln aufnehmen und gemeinsam zur Mitte der Kartoffelerntemaschine führen, wo sie auf den Boden abgeworfen werden. Die Ablage der Kartoffeln in einem Schwad erfolgt auf ein vorbereitetes Schwadbett. Dieses Schwadbett wird durch die Andruckwalze 28 planiert. Zur Steigerung der Wirkung der Andruckwalze 28 ist es möglich, daß die Vorschubgeschwindigkeit der möglicherweise hydraulisch angetriebenen Andruckwalze höher ist als die des Schleppers 2.

Das Kartoffelkraut fällt nicht zwischen den Stäben oder Maschen des Krautförderbandes hindurch sondern bleibt auf diesen liegen. Es wird nahezu vollständig an der hinteren Umlenkeinrichtung 13, welche um eine Drehachse 13a umläuft, abgeworfen. Sollte noch ein Rest am abwärts führenden Trum des Krautförderbands 11 haften geblieben sein, wird dieser Rest durch die Häckselvorrichtung abgesaugt oder abgezogen. Die Häckselvorrichtung besitzt eine Welle 19, welche sich um eine Drehachse 19a dreht. Sie besitzt Häckselwerkzeuge 20, welche auf dem Schlagkreis 29 umlaufen. An einer Leiste 21 sind gegebenenfalls als Messer ausgebildete ortsfeste Gegenstücke 22 vorgesehen, welche mit den Häckselwerkzeugen 20 zusammenwirken.

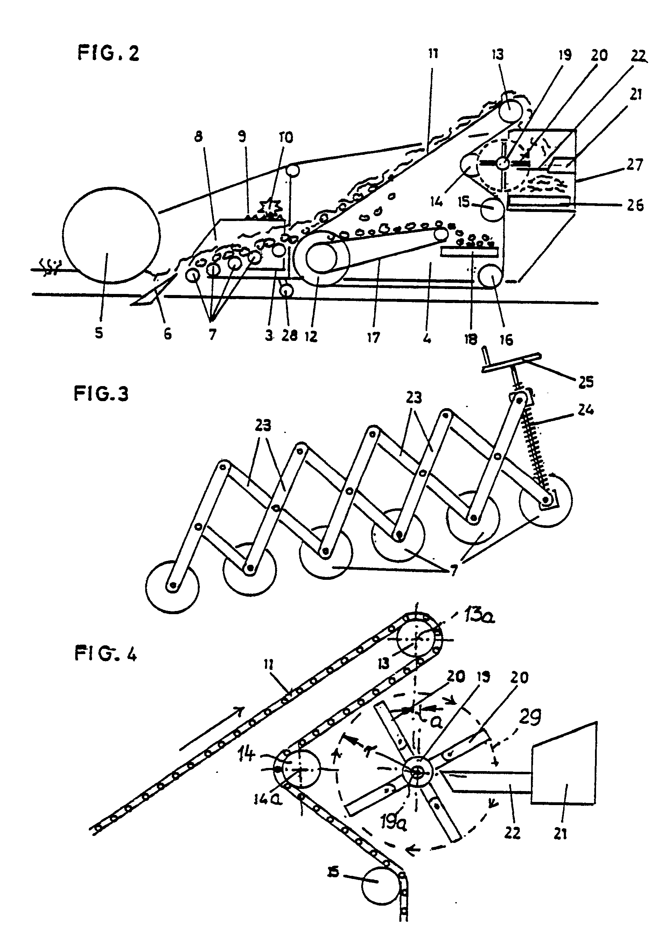

Wenn man zwei gedachte Ebenen senkrecht durch die Drehachsen 13a und 19a legt, fallen diese bei der Ausführungsform gemäß Figur 4 praktisch zusammen. Im Gegensatz zum Stand der Technik, bei dem der Abstand der beiden gedachten Ebenen größer ist als der Radius des Schlagkreises 29, ist bei der neuen Kartoffelerntemaschine der Abstand kleiner. Der Abstand a zwischen den beiden gedachen Ebenen durch die Drehachsen 13a und 19a ist der von der Drehachse 13a nach hinten zur Drehachse 19a gemessene Abstand. Die Lehre der Erfindung ist also auch verwirklicht, wenn die Drehachse 19a gegenüber der Drehachse 13a nach vorn verlegt ist und auch dann, wenn diese Verlegung sogar größer ist als der Betrag des Radius r.

Es erfolgt also ein Versatz der Häckselvorrichtung und des Schlagkreises 29 gegenüber der Drehachse 13 in Richtung auf das Rodeschar. Im dargestellten Ausführungsbeispiel ist das rückwärtige abwärts gerichtete Trum des Krautförderbandes durch die Umlenkeinrichtungen 13, 14 und 15 in der Form eines liegenden V geführt. Dies hat zur Folge, daß der Schlagkreis 29 an zwei Stellen besonders dicht an das Krautförderband 11 herangeführt wird, nämlich einerseits zwischen den Umlenkeinrichtungen 13 und 14 und andererseits zwischen den Umlenkeinrichtungen 14 und 15. Sowohl das bis zur Umlenkeinrichtung 13 geführte Kartoffelkraut als auch eventuell noch daran anhängende Kartoffeln werden sicher in die Häckselvorrichtung eingeworfen oder von der Häckselvorrichtung sogar abgezogen. Das gesamte eingeworfene Gut wird von den Häckselwerkzeugen 20 in Verbindung mit den Gegenstücken 21 zerhäckselt. Damit wird eine Verunkrautung des Ackers sicher ausgeschlossen.

Die Walzen 7 der vorderen Förder- und Siebvorrichtung sind, wie Figur 3 zeigt, am unteren Ende von Hebeln 23 angeordnet, welche an ihren beiden Enden und in ihrer Mitte jeweils einen Drehpunkt aufweisen, an dem sie miteinander in Form von Parallelogrammen nach Art eines Pantographen verbunden sind. An einem Ende dieser Anordnung sind die Enden der beiden Hebel 23 durch eine Spindel 24 miteinander verbunden. Diese Spindel wird durch ein Handrad 25 verdreht, mit der Folge, daß der Abstand der Enden der Hebel 23 voneinander verstellt werden kann. Durch diese Verstellung wird der Abstand der einzelnen in einer Reihe befindlichen Walzen voneinander verändert und den gegebenen Verhältnissen angepaßt. Die Abstandsänderung erfolgt stufenlos. Die Verwendung der Walzen 7 bringt den Vorteil mit sich, daß die Arbeitslänge gegenüber anderen Förder- und Siebvorrichtungen erheblich verkürzt ist. Dadurch wird die Gesamtbaulänge der Kartoffelerntemaschine erheblich verkürzt.

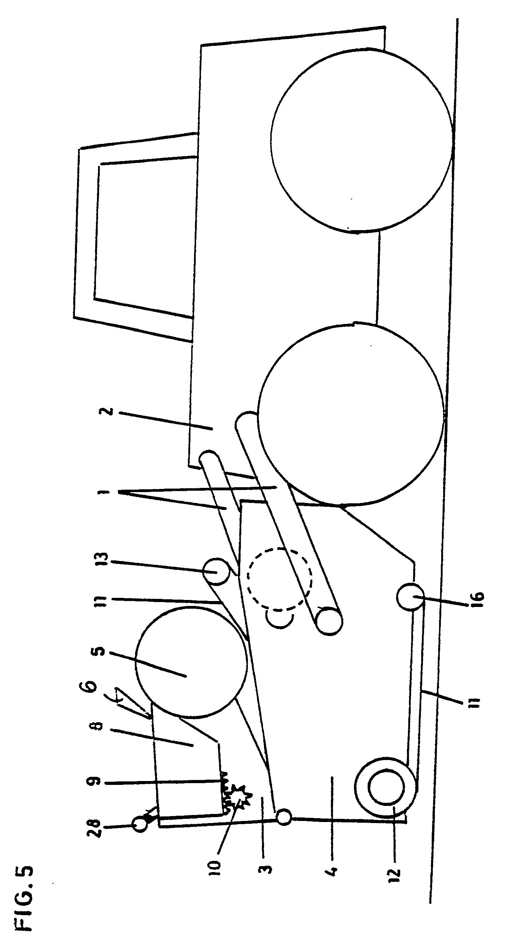

Der Antrieb aller Aggregate erfolgt über hydraulische Motoren. Dies ermöglicht unter anderem die Ausbildung eines zweiteiligen, nach oben klappbaren Maschinengestells. Wie aus Figur 5 ersichtlich ist, ist der vordere Teil 3 des Gestells für den Straßentransport hochklappbar.

Das gehäckselte Kraut wird auf ein Querförderband 26 geworfen, das über den Boden einer Querförderrinne 27 angeordnet ist und das gehäckselte Gut seitlich neben der Erntemaschine abwirft.

## Ansprüche

1. Mehrreihige Kartoffelerntemaschine mit einer Rodeeinrichtung (5, 6), einem umlaufenden Krautförderband (11) und einem Kartoffelförderband (17) sowie mit einer am hinteren Ende des Krautförderbandes angeordneten Häckseleinrichtung, die eine rotierende Welle (19) mit Häckselwerkzeugen (20) aufweist, die auf einem zum Krautförderband benachbarten Schlagkreis (29) umlaufen, wobei am hinteren Ende des Krautförderbandes eine um eine Drehachse (13a) umlaufende Umlenkeinrichtung (13) vorgesehen ist, die das in Richtung auf die Häckseleinrichtung zulaufende Krautförderband nach unten umlenkt, dadurch gekennzeichnet, daß das Krautförderband (11) um die Umlenkeinrichtung (13) herum auch nach vorn geführt ist und der Abstand (a) zweier durch die Drehachse (19a) der rotierenden Welle (19) des Häckslers und die Drehachse (13a) der Umlenkeinrichtung (13) senkrecht verlaufender gedachter Ebenen kleiner ist als der Radius (r) des Schlagkreises (29).

2. Mehrreihige Kartoffelerntemaschine nach Anspruch 1, dadurch gekennzeichnet, daß das Krautförderband (11) die Umlenkeinrichtung (13) über einen Winkel von über 90° umschlingt.

3. Mehrreihige Kartoffelerntemaschine nach Anspruch 1 oder 2, dadurch gekennzeichnet, daß die Drehachse (19a) der rotierenden Welle (19) des Häckslers annähernd vertikal unter der Drehachse (13a) der Umlenkeinrichtung (13) liegt.

4. Mehrreihige Kartoffelerntemaschine nach einem oder mehreren der Ansprüche 1 bis 3, dadurch gekennzeichnet, daß unterhalb der Umlenkeinrichtung (13) mindestens zwei weitere Umlenkeinrichtungen (14 und 15) für das Krautförderband (11) vorgesehen sind, wobei die Drehachse (14a) der zweiten Umlenkeinrichtung, (14) die benachbart zur ersten Umlenkeinrichtung (13) angeordnet ist, in Richtung auf die Rodeeinrichtung (5, 6) versetzt angeordnet ist.

5. Mehrreihige Kartoffelerntemaschine nach einem oder mehreren der Ansprüche 1 bis 4, dadurch gekennzeichnet, daß die Drehachse (14a) der zweiten Umlenkeinrichtung (14) zumindest annähernd in Höhe der Drehachse (19a) der rotierenden Welle (19) des Häckslers liegt.

6. Mehrreihige Kartoffelerntemaschine nach einem oder mehreren der Ansprüche 1 bis 5, dadurch gekennzeichnet, daß die aufeinanderfolgenden Umlenkeinrichtungen (13, 14 und 15) am hinteren Ende des Krautförderbandes (11) dieses Krautförderband (11) in einer Schleife führen, die die Form eines liegenden V besitzt, wobei das Krautförderband (11) an zwei Stellen dicht an den Schlagkreis (29) der Häckselwerkzeuge (20) herangeführt ist.

7. Mehrreihige Kartoffelerntemaschine nach einem oder mehreren der Ansprüche 1 bis 6, dadurch gekennzeichnet, daß hinter der Welle (19) des Häckslers annähernd in gleicher Höhe mit den Häckselwerkzeugen (20) zusammenwirkende ortsfeste Gegenstücke (22) angeordnet sind.

8. Mehrreihige Kartoffelerntemaschine nach einem oder mehreren der Ansprüche 1 bis 7, dadurch gekennzeichnet, daß sie zur Befestigung an der Frontseite eines Fahrzeugs (2) ausgebildet ist. ·

9. Mehrreihige Kartoffelerntemaschine nach einem oder mehreren der Ansprüche 1 bis 8, dadurch gekennzeichnet, daß sie ein vorderes Gestellteil (3) und ein hinteres Gestellteil (4) aufweist, wobei der vordere Gestellteil (3) nach oben und hinten verschwenkbar an dem hinteren Gestellteil (4) angeordnet ist.

10. Mehrreihige Kartoffelerntemaschine nach einem oder mehreren der Ansprüche 1 bis 9, dadurch gekennzeichnet, daß im vorderen Gestellteil (3) in einer Reihe hintereinander angeordnete Walzen (7) als Förder- und Siebvorrichtung vorgesehen sind.

11. Mehrreihige Kartoffelerntemaschine nach einem oder mehreren der Ansprüche 1 bis 10, dadurch gekennzeichnet, daß die Walzen (7) zur Veränderung ihres Abstands an Hebeln angeordnet sind, die zu Parallelogrammen scherenförmig nach Art eines Pantographen zusammengefügt sind.

## Claims

1. Multi-row potato harvesting machine having a lifting device (5, 6), a revolving haulm conveyor belt (11) and a potato conveyor belt (17) and having a chopping device which is arranged at the rear end of the haulm conveyor belt and has a rotating shaft (19) having chopping tools (20) which revolve on a circular beating path (29) adjacent to the haulm conveyor belt, a deflection device (13) which revolves about an axis of rotation (13a) and deflects the haulm conveyor belt running towards the chopping device downwards being provided at the rear end of the haulm conveyor belt, characterized in that the haulm conveyor belt (11) is also guided forwards around the deflection device (13) and the distance (a) between two imaginary planes extending perpendicularly through the axis of rotation (19a) of the rotating shaft (19) of the chopper and the axis of rotation (13a) of the deflection device (13) is smaller than the radius (r) of the circular beating path (29).

2. Multi-row potato harvesting machine according to Claim 1, characterized in that the haulm conveyor belt (11) wraps the deflection device (13) over an angle of more than 90°.

3. Multi-row potato harvesting machine according to Claim 1 or 2, characterized in that the axis of rotation (19a) of the rotating shaft (19) of the chopper is situated approximately vertically below the axis of rotation (13a) of the deflection device (13).

4. Multi-row potato harvesting machine according to one or more of Claims 1 to 3, characterized in that at least two further deflection devices (14 and 15) for the haulm conveyor belt (11) are provided below the deflection device (13), the axis of rotation (14a) of the second deflection device (14), which is arranged next to the first deflection device (13) is arranged offset towards the lifting device (5, 6).

5. Multi-row potato harvesting machine according to one or more of Claims 1 to 4, characterized in that the axis of rotation (14a) of the second deflection device (14) is situated at least approximately at the level of the axis of rotation (19a) of the rotating shaft (19) of the chopper.

6. Multi-row potato harvesting machine according to one or more of Claims 1 to 5, characterized in that the successive deflection devices (13, 14 and 15) at the rear end of the haulm conveyor belt (11) guide this haulm conveyor belt (11) in a loop which has the shape of a horizontal V, the haulm conveyor belt (11) being brought close to the circular beating path (29) of the chopping tools (20) at two points.

7. Multi-row potato harvesting machine according to one or more of Claims 1 to 6, characterized in that fixed counterpieces (22) cooperating with the chopping tools (20) are arranged approximately at the same level behind the shaft (19) of the chopper.

8. Multi-row potato harvesting machine according to one or more of Claims 1 to 7, characterized in that it is designed for attachment to the front of a vehicle (2).

9. Multi-row potato harvesting machine according to one or more of Claims 1 to 8, characterized in that it has a front framework part (3) and a rear framework part (4), the front framework part (3) being swivellable upwards and backwards on the rear framework part (4).

10. Multi-row potato harvesting machine according to one or more of Claims 1 to 9, characterized in that rollers (7) arranged one behind the other in a row are provided in the front framework part (3) as a conveying and screening device.

11. Multi-row potato harvesting machine according to one or more of Claims 1 to 10, characterized in that, for the purpose of altering their spacing, the rollers (7) are arranged on levers which are joined together scissor-fashion to form parallelograms in the manner of a pantograph.

## Revendications

1. Machine multirangs à récolter les pommes de terre comprenant un dispositif arracheur (5,6), une bande sans fin (11) de transport pour les fanes, une bande de transport (17) pour les pommes de terre, ainsi qu'un hache-fanes, disposé à l'extrémité arrière de la bande de transport de fanes, lequel hache-fanes présente un arbre rotatif (19) avec des outils-hacheurs (20), tournant sur un cercle de frappe (29) proche de la bande de transport de fanes, un dispositif de renvoi (13), qui tourne autour d'un axe de rotation (13a) et fait dévier, vers le bas, la bande de transport de fanes, qui se déplace en direction du hache-fanes, étant prévu à l'extrémité arrière de la bande de transport de fanes, caractérisée par le fait que la bande de transport de fanes (11) contourne également en avant le dispositif de renvoi (13) et que l'intervalle (a), entre deux plans verticaux virtuels passant par l'axe de rotation (19a) de l'arbre rotatif (19) du hache-fanes et par l'axe de rotation (13a) du dispositif de renvoi (13) est plus petit que le rayon (r) du cercle de frappe (29).

2. Machine multirangs à récolter les pommes de terre selon la revendication 1, caractérisée par le fait que la bande de transport (11) de fanes embrasse le dispositif de renvoi (13) sur un angle de plus de 90 degrés.

3. Machine multirangs à récolter les pommes de terre selon la revendication 1 ou 2, caractérisée par le fait que l'axe de rotation (19a) de l'arbre rotatif (19) du hache-fanes est situé sensiblement verticalement, au-dessous de l'axe de rotation (13a) du dispositif (13) de renvoi.

4. Machine multirangs à récolter les pommes de terre selon une ou plusieurs des revendications 1 à 3, caractérisée par le fait qu'au moins deux autres dispositifs (14 et 15) de renvoi sont prévus en aval des dispositifs (13) de renvoi pour la bande de transport (11) de fanes, l'axe de rotation (14a) du second dispositif (14) de renvoi, disposé à proximité du premier dispositif (13) de renvoi, étant décalé en direction de l'arracheuse (5, 6).

5. Machine multirangs à récolter les pommes de terre selon une ou plusieurs des revendications 1 à 4, caractérisée par le fait que l'axe de rotation (14a) du deuxième dispositif (14) de renvoi est situé au moins sensiblement à la hauteur de l'axe de rotation (19a) de l'arbre rotatif (19) du hache-fanes.

6. Machine multirangs à récolter les pommes de terre selon une ou plusieurs des revendications 1 à 5, caractérisée par le fait que les dispositifs de renvoi successifs (13, 14 et 15), à l'extrémité postérieure de la bande de transport (11) de fanes, font faire à la bande de transport (11) de fanes une boucle en forme de V couché, la bande de transport (11) de fanes étant ainsi conduite, à deux endroits, à proximité immédiate du cercle de frappe (29) des outils-hacheurs.

7. Machine multirangs à récolter les pommes de terre selon une ou plusieurs des revendications 1 à 6, caractérisée par le fait que des contre-outils (20) fixes en position sont disposés derrière l'arbre (19) du hache-fanes, sensiblement à la hauteur des outils-hacheurs (20).

8. Machine multirangs à récolter les pommes de terre selon une ou plusieurs des revendications 1 à 7, caractérisée par le fait qu'elle est conçue pour pouvoir être fixée à la face frontale d'un véhicule (2).

9. Machine multirangs à récolter les pommes de terre selon une ou plusieurs des revendications 1 à 8, caractérisée par le fait qu'elle présente une partie antérieure (3) de châssis et une partie postérieure (4) de châssis, la partie antérieure (3) du châssis étant disposée, rabattable en haut et vers l'arrière, sur la partie postérieure (4) du châssis.

10. Machine multirangs à récolter les pommes de terre selon une ou plusieurs des revendications 1 à 9, caractérisée par le fait que des rouleaux (7), disposés en une rangée, les uns derrière les autres, sont prévus comme dispositif de transport et de criblage dans la partie antérieure (3) du châssis.

11. Machine multirangs à récolter les pommes de terre selon une ou plusieurs des revendications 1 à 10, caractérisée par le fait que les rouleaux (7) sont disposés sur des leviers aux fins de réglage de leur intervalle, les leviers étant reliés entre, en ciseaux, en forme de parallélogramme du genre d'un pantographe.

FIG. 1

EP 0 303 226 B1

FIG. 2

FIG.3

FIG. 4

FIG.5